Europäisches Patentamt

European Patent Office

Office européen des brevets

(11) Numéro de publication: **0 039 295**
**A1**

## (12) DEMANDE DE BREVET EUROPEEN

(21) Numéro de dépôt: **81400673.0**

(22) Date de dépôt: **29.04.81**

(51) Int. Cl.³: **F 16 K 11/02**
**F 16 K 31/36**

(30) Priorité: **30.04.80 FR 8009853**

(43) Date de publication de la demande:
**04.11.81 Bulletin 81/44**

(84) Etats contractants désignés:
**DE FR GB**

(71) Demandeur: **POCLAIN HYDRAULICS Société Anonyme
de droit français
Boîte Postale no 12
F-60410 Verberie(FR)**

(72) Inventeur: **Fillion, Pierre Christian
203, Chaussée de Pontpoint
Pontpoint F-60700 Pont Sainte-Maxence(FR)**

(74) Mandataire: **Hoisnard, Jean-Claude et al,
Cabinet Beau de Lomenie 55, rue d'Amsterdam
F-75008 Paris(FR)**

(54) Clapet de mise en communication sélective de trois enceintes, dont deux susceptibles de contenir un fluide sous pression.

(57) Clapet de mise en communication sélective de trois enceintes 21, 22, 23, comportant un corps muni d'un alésage à l'intérieur duquel un tiroir tubulaire est monté coulissant.

La cavité intérieure (5) du tiroir est en communication permanente avec 2 premières (21,22) enceintes, l'une d'elles 21 étant reliée à une première source de fluide sous pression F, la troisième enceinte 23 étant reliée à une deuxième source de fluide sous pression I, cependant que la face externe du tiroir 9-10 comporte un rétrécissement 10 de sa section qui ménage un espace annulaire 13, la troisième enceinte 23 étant en communication permanente avec l'espace annulaire 13.

Une application est la réalisation d'un clapet de répartition automatique de débit.

Fig. 1

EP 0 039 295 A1

0039295

Clapet de mise en communication sélective de trois enceintes, dont deux susceptibles de contenir un fluide sous pression.

L'invention propose, dans le domaine de la mise en communication sélective de deux enceintes contenant un fluide sous pression, avec une autre enceinte, un nouveau type de clapet.

L'invention est donc relative à un clapet de mise en communication sélective de trois enceintes, comportant un corps muni d'un alésage à l'intérieur duquel un tiroir cylindrique tubulaire est monté à coulissement avec étanchéité.

La cavité intérieure du tiroir est en communication permanente, sans aucune restriction, par chaque ouverture d'extrémité de ce tiroir avec deux premières des trois dites enceintes, cependant que, d'une part, une des deux premières enceintes est reliée à une première source de fluide sous pression, d'autre part, la troisième des trois enceintes est reliée à une deuxième source de fluide sous pression distincte de ladite première source de fluide sous pression, qu'une première extrémité du tiroir est susceptible d'être en appui étanche sur le siège du clapet solidaire du corps, que la face périphérique externe du tiroir comporte un rétrécissement de sa section entre la face du guidage étanche du coulissement du tiroir dans l'alésage et ladite première extrémité, qui coopère à ménager un espace annulaire entre cet alésage et cette face périphérique externe, et, que la troisième enceinte est en communication permanente avec ledit espace annulaire.

Les dispositions suivantes sont en outre, de préférence, adoptées :

- un organe élastique de rappel est interposé entre le corps et le tiroir, et tend à rappeler la première extrémité du tiroir en appui étanche sur le siège du clapet ;

- la face interne du tiroir présente, à partir de la deuxième extrémité de ce tiroir qui est opposée à ladite première extrémité, un élargissement de sa section qui s'étend sur une longueur axiale inférieure à la longueur du tiroir jusqu'à un épaulement interne du tiroir, cependant que l'organe de rappel élastique est constitué par un ressort à boudins qui prend appui sur ledit épaulement et dont la partie située à l'intérieur de la cavité du tiroir est susceptible d'être maintenue par la face interne dudit élargissement.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à titre indicatif et non limitatif.

Il sera fait référence aux dessins annexés, dans lesquels :

- la figure 1 est une coupe axiale d'un clapet conforme à l'invention, représenté dans la configuration de non-communication des deux enceintes entre lesquelles il est disposé;

- la figure 2 est une coupe axiale du clapet de la figure 1, mais représenté cette fois dans la configuration de mise en communication desdites enceintes ; et,

- les figures 3 et 4 représentent schématiquement deux modes distincts de fonctionnement du clapet des figures 1 et 2.

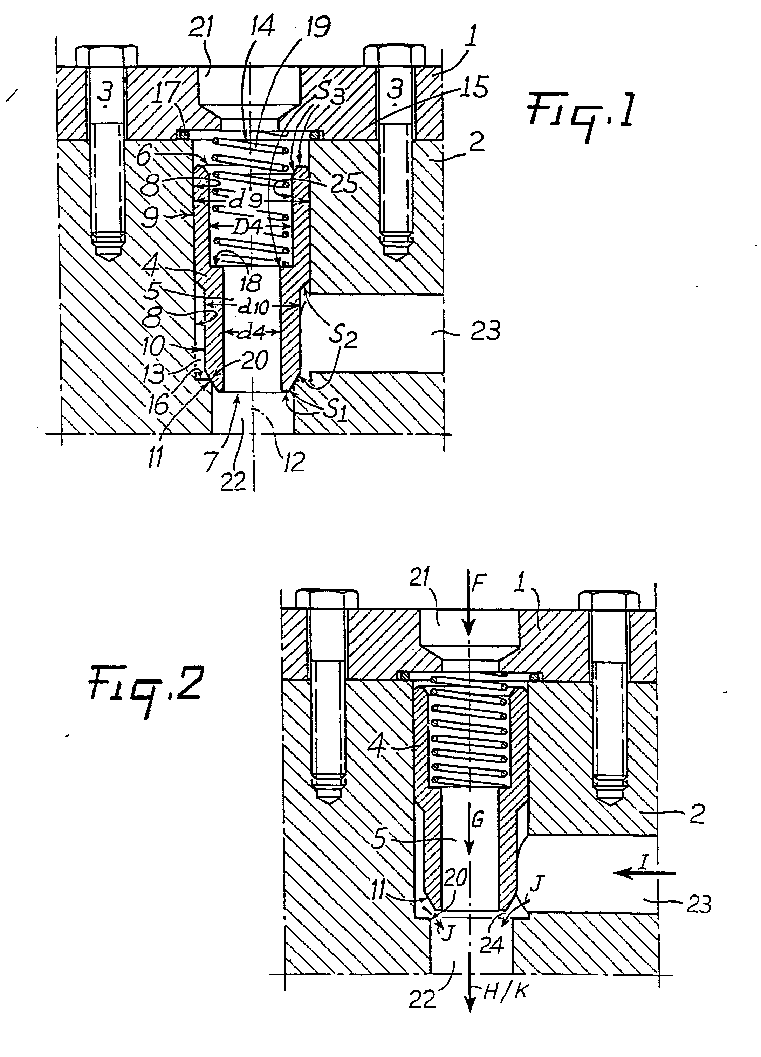

La figure 1 représente un clapet constitué par :

- un corps en deux parties 1 et 2 assemblées par des vis 3, ou tout autre moyen permettant une fixation amovible, et,

- un tiroir cylindrique 4, qui est tubulaire et comporte donc une cavité intérieure 5 qui débouche dans les deux tranches transversales extrêmes 6 et 7 de ce tiroir.

Dans la partie 2 du corps, un alésage 8 est ménagé, à l'intérieur duquel le tiroir 4 est monté coulissant avec étanchéité entre une première partie 9 de sa face radiale externe et ledit alésage 8. Cette première partie de la face radiale du tiroir, qui s'étend de la tranche 6 jusqu'à sensiblement la moitié de longueur, est prolongée par une deuxième partie 10, qui s'étend jusqu'à l'autre tranche extrême 7 en se terminant par un chanfrein tronconique 11. Les sections des deux parties 9 et 10 de ladite face radiale sont circulaires et coaxiales à l'axe commun 12 de la cavité 5 et de l'alésage 8, la section de la deuxième partie 10 (de diamètre $d10$) étant inférieure à celle de la première partie 9 (de diamètre $d9$), de sorte qu'un espace annulaire 13 est ménagé entre l'alésage 8 et ladite deuxième partie 10.

L'alésage 8 est limité du côté de la tranche extrême 6 du tiroir, par l'orifice 14 d'introduction du tiroir dans l'alésage, qui débouche dans le plan d'assemblage 15 des parties 1 et 2 du corps, et, du côté opposé par un épaulement en retrait 16 de la deuxième partie 2 du corps: A noter qu'un joint d'étanchéité 17 est interposé entre les deux parties 1 et 2 du corps, et interdit toute fuite de fluide par le plan d'assemblage 15.

On observe également que la cavité axiale 5 du tiroir comporte, le long de sa partie qui s'étend de la tranche extrême 6 jusqu'à environ la moitié de la longueur du tiroir, un élargissement (diamètre $D4$) de sa section, dont le diamètre est normalement égal à $d4$, et qui est limité par un épaulement en retrait 18. Un ressort hélicoïdal 19 est interposé entre la première partie 1 du corps, constituant une première face d'appui, et, l'épaulement 18, constituant une deuxième face d'appui, et pousse le tiroir 4 jusqu'à mettre en appui étanche sur le siège 20 du clapet, ménagé dans la deuxième partie 2 du corps, le chanfrein tronconique 11. La face interne 25 de la partie élargie de la cavité 5 assure le soutien radial des spires du ressort 19.

On note enfin la présence de trois conduits :

- le conduit 21, qui débouche dans l'orifice 14 de l'alésage 8, et est ménagé dans la première partie du corps ;

- le conduit 22, qui, ménagé dans la deuxième partie du corps, est en communication permanente avec la tranche extrême 7 du tiroir 4, et,

- le conduit 23, qui, lui aussi, est ménagé dans la deuxième partie du corps, et débouche en permanence dans l'espace annulaire 13.

Lorsque le chanfrein 11 du tiroir 4 est en appui sur le siège 20 du clapet (figure 1), l'espace annulaire 13 est isolé du conduit 22. Au contraire, lorsque le chanfrein 11 est écarté dudit siège 20 (figure 2), un passage 24 est ménagé entre ces deux éléments et les met en communication. Dans les deux configurations, on note que les conduits 21 et 22 sont en communication permanente par l'intermédiaire de la cavité intérieure 5 du tiroir.

Le tiroir 4 est soulevé hors d'appui du siège 20 du clapet, ou, au contraire, repose sur ce siège 20 selon la répartition des forces élastiques et de pression des fluides contenus dans les divers conduits.

Avec les définitions suivantes :

$S_1$ = surface de l'extrémité du tiroir 4 communiquant avec le conduit 22, le chanfrein 11 étant en appui sur le siège 20,

$S_2$ = somme des surfaces du raccordement des première 9 et deuxième 10 parties du tiroir 4 et de la partie du chanfrein 11 communiquant avec l'espace annulaire 13, chanfrein 11 également en appui sur le siège 20,

$S_3$ = somme des surfaces de l'extrémité du tiroir 4 communiquant avec le conduit 21 et de l'épaulement 18,

$F_{19}$ = force de rappel du ressort 19, au moment de l'ouverture du clapet, l'équation suivante est vérifiée :

Forces de pression agissant sur $S_1$ et $S_2$ =
Forces de pression agissant sur $S_3$ + $F_{19}$.

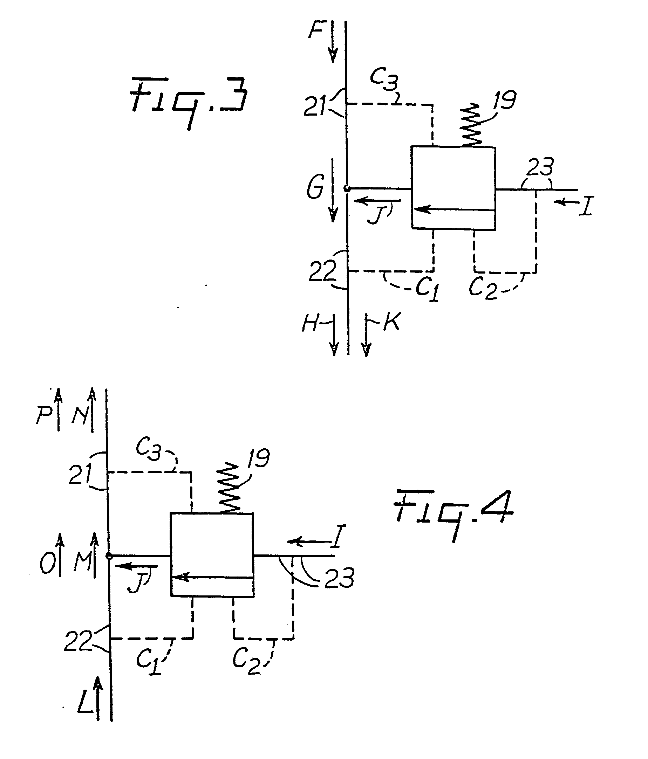

La représentation schématique du tiroir est celle des figures 3 et 4, dans laquelle on retrouve les conduits 21, 22 et 23, le ressort 19, et trois conduits en traits interrompus $C_1$, $C_2$ et $C_3$ qui symbolisent l'action des forces de pression sur $S_1$, $S_2$ et $S_3$, ou sur les surfaces qui en découlent après la levée du tiroir 4 hors d'appui du siège 20.

Ce qui est a priori surprenant, mais est cependant vérifié, c'est la variété des sens d'écoulement des fluides, les valeurs des forces développées impliquant la réalisation de tel ou tel mode d'écoulement parmi les deux représentés.

Selon la figure 3 (et la représentation réelle de la figure 2), le fluide sous pression provenant du conduit 21 (flèche $\underline{F}$) traverse la cavité intérieure 5 du tiroir 4 (flèche $\underline{G}$) et s'écoule vers, puis dans le conduit 22 (flèche $\underline{H}$). Le fluide sous pression provenant du conduit 23 (flèche $\underline{I}$), à travers le passage 24, se joint au fluide précédent (flèche $\underline{J}$) et s'écoule également dans le conduit 22 (flèche $\underline{K}$).

Selon le mode d'écoulement de la figure 4, l'un des fluides sous pression pénètre par le conduit 22 (flèche $\underline{L}$), traverse la cavité intérieure du tiroir (flèche $\underline{M}$), et s'écoule finalement dans le conduit 21 (flèche $\underline{N}$). L'autre fluide sous pression pénètre par le conduit 23 (flèche $\underline{I}$), traverse le passage 24 (flèche $\underline{J}$), la cavité intérieure du tiroir (flèche $\underline{O}$) et rejoint le premier fluide dans le conduit 21 dans lequel il s'écoule (flèche $\underline{P}$).

Ainsi, par un choix judicieux des surfaces $S_1$, $S_2$ et $S_3$, en fonction des pressions des fluides admis, et, de la force $F_{19}$ du ressort 19, il est possible, en adoptant le clapet précédemment décrit, de déclencher automatiquement une répartition des deux débits admis conforme à l'un des modes d'écoulement représentés. Le moyen proposé est un clapet d'une constitution très simple, donc fiable et peu coûteux.

L'invention n'est pas limitée à la réalisation représentée, mais en couvre au contraire toutes les variantes qui pourraient lui être apportées sans sortir de son cadre, ni de son esprit.

Ainsi, on comprend bien qu'en variante, la partie 10 du tiroir 4 pourrait avoir un diamètre égal à celui de la partie 9, l'espace annulaire 13 étant alors constitué par une gorge ménagée dans la partie 2 du corps du clapet.

REVENDICATIONS

1. Clapet de mise en communication sélective de trois enceintes (21, 22, 23), comportant un corps muni d'un alésage à l'intérieur duquel un tiroir cylindrique tubulaire est monté à coulissement avec étanchéité,

caractérisé en ce que la cavité intérieure (5) du tiroir est en communication permanente, sans aucune restriction, par chaque ouverture d'extrémité de ce tiroir avec deux premières (21, 22) des trois dites enceintes,

en ce que, d'une part, une des deux premières enceintes (21 ou 22) est reliée à une première source de fluide sous pression ($\underline{F}$ ou $\underline{L}$), d'autre part, la troisième (23) des trois enceintes est reliée à une deuxième source de fluide sous pression ($\underline{I}$) distincte de ladite première source de fluide sous pression ($\underline{F}$ ou $\underline{L}$),

en ce qu'une première extrémité (11) du tiroir (4) est susceptible d'être en appui étanche sur le siège (20) du clapet solidaire du corps (2),

en ce que la face périphérique externe du tiroir (9-10) comporte un rétrécissement (10) de sa section entre la face (9) du guidage étanche du coulissement du tiroir dans l'alésage (8) et ladite première extrémité (11), qui coopère à ménager un espace annulaire (13) entre cet alésage (8) et cette face périphérique externe (10), et,

en ce que la troisième enceinte (23) est en communication permanente avec ledit espace annulaire (13).

2. Clapet selon la revendication 1, caractérisé en ce que, de manière connue en soi, un organe élastique de rappel (19) est interposé entre le corps (1) et le tiroir (4) et tend à rappeler la première extrémité (11) du tiroir (4) en appui étanche sur le siège (20) du clapet.

3. Clapet selon la revendication 2, caractérisé en ce que, de manière connue en soi, la face interne du clapet présente, à partir de la deuxième extrémité (6) de ce tiroir (4) qui est opposée à ladite première extrémité (11), un élargissement (D4) de sa section qui s'étend sur une longueur axiale inférieure à la longueur du tiroir jusqu'à un épaulement interne (18) du tiroir, cependant que l'organe de rappel élastique (19) est constitué par un ressort à boudins qui prend appui sur ledit épaulement (18) et dont la partie située à l'intérieur de la cavité
(5) du tiroir est susceptible d'être maintenue par la face interne
(25) dudit élargissement.

0039295

*Fig.1*

*Fig.2*

Fig.3

Fig.4

0039295
Numéro de la demande

Office européen
des brevets

**RAPPORT DE RECHERCHE EUROPEENNE**

EP 81 40 0673

| Catégorie | Citation du document avec indication, en cas de besoin, des parties pertinentes | Revendica-tion concernée |
|---|---|---|
| | FR - A - 2 214 074 (REXNORD INC.)<br> * Page 5, lignes 4-11; figure 1 *<br><br>-- | 1,2,3 |
| | FR - A - 2 334 861 (DEERE ET COMPANY)<br> * Page 3, lignes 26-37; figure 2 *<br><br>-- | 1,2 |
| | US - A - 2 639 103 (F. BALL)<br> * Colonne 4, lignes 53-69; figure 2 *<br><br>--- | 1,2 |

**DOCUMENTS CONSIDERES COMME PERTINENTS**

**CLASSEMENT DE LA DEMANDE (Int. Cl.³)**

F 16 K 11/02
F 16 K 31/36

**DOMAINES TECHNIQUES RECHERCHES (Int. Cl.³)**

F 16 K
F 16 B

**CATEGORIE DES DOCUMENTS CITES**

X: particulièrement pertinent

A: arrière-plan technologique

O: divulgation non-écrite

P: document intercalaire

T: théorie ou principe à la base de l'invention

E: demande faisant interference

D: document cité dans la demande

L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 29-06-1981 | V. REETH |

OEB Form 1503.1  06.78